# EUROPEAN PATENT APPLICATION

(11) **EP 1 862 920 A1**
(43) Date of publication of application: **05.12.2007**
(21) Application number: 07108280.4
(22) Date of filing: 15.05.2007
(51) Int. Cl.: G06F 17/30

(54) **Apparatus and method for storing and managing data**

(30) Priority: 29.05.2006 KR 20060048259
(71) Applicant: Samsung Electronics Co., Ltd., Suwon-si, Gyeonggi-Do 442-742 (KR)
(72) Inventor: Kim, Woon-seok No. 108-401 Cheongsolmaeul, Sungnam-si,Gyeonggi-do (KR)
(74) Representative: Perkins, Dawn Elizabeth

(57) **Abstract**

Provided are an apparatus and method for managing data, more particularly, an apparatus and method for managing data by classifying a file identifier descriptor (FID) of a universal disk format (UDF) system into a directory FID and a file FID. The apparatus includes an input unit that receives a search command including a save location of stored, predetermined data in a predetermined file system environment, a path extractor that analyzes the search command, and sequentially extracts the path included in the save location, a controller that determines whether the extracted path is a directory or a file, and a path searcher that searches for the extracted path in a directory area including a file identifier corresponding to the result of the determination.

## Description

Apparatuses and methods consistent with the present invention relate to managing data, and more particularly, to managing data by classifying a file identifier descriptor (FID) of a universal disk format (UDF) system into a directory FID and a file FID.

In general, an operating system (OS) uses a file system in order to manage data. The file system is an essential component having a logical structure for the management of data. For example, the format command in Microsoft Windows is a process of creating the file system and initializing it. That is, a user cannot store or delete files until a file system has been created.

Different OSs use different file systems. For example, file allocation table (FAT) and new technology file system (NTFS) are used in the Windows operating system, and the Unix file system (UFS), extended 2 (EXT2), extended 3 (EXT3), and journaling file system (JFS) are used in Unix, Linux and variants thereof. Each file system provides extra functions such as data coding and data compression.

The file system organizes and stores files, and is divided into a data area where real data (e.g. a file or a directory) is stored, and an information area where information on the data stored in the data area is stored. That is, the information on the property, access permission, access time, size, and location of the data is stored in the information area.

In contrast, the universal disk format (UDF) is a file system standard for an optical medium, which was developed by Optical Storage Technology Association (OSTA). UDF is used in place of a conventional ISO 9660 file system, which are not suitable for CD media such as DVDs and CD-RWs, and has functions to read the data of one file at a time without wasting overhead, and to partially or completely delete the file on the CD-RW medium using a new technique called packet writing.

A UDF system is divided into a data area where data is stored and a data entry area where information on the data stored in the data area is stored. Here, the data includes files and directories. The data area of the file stores a real file, whereas the data area of the directory stores information on the file and subdirectory.

The data area of the directory storing the information on the file and subdirectory is called a directory area and information on the file and subdirectory included in a corresponding directory is recorded in the form of a FID therein. The FID includes the name and location of the file or subdirectory.

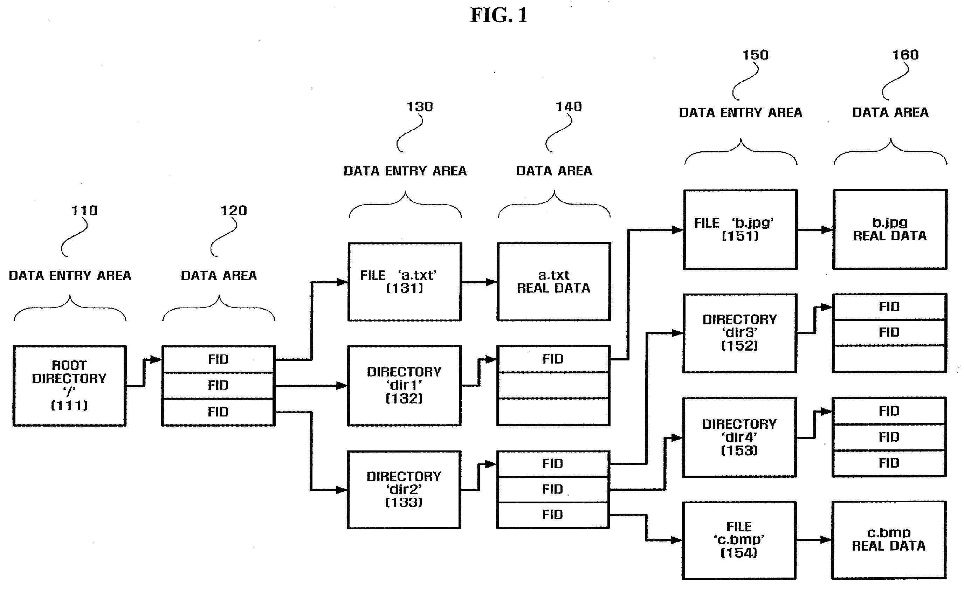

Figure 1 is a conceptual diagram illustrating a hierarchical structure of files and directories in a UDF file system, where each tier is divided into data entry areas 110, 130, and 150 and data areas 120, 140, and 160.

Here, each directory area included in the data areas 120, 140, and 160 of the directory includes at least one of the FID containing information on the file or directory. The FIDs are sequentially arranged in the order they were created.

When searching for the file or directory, the device executes the search in the order the FIDs are arranged, which can be time-consuming. That is, since the FIDs in each directory area are arranged in the order they were created regardless of the type of the data in a lower layer, the search is not executed by a data type. Accordingly, the device searches for the FID with respect to the directory when it should search for the file, and searches for the FID with respect to the file when it should search for the directory.

For example, referring to Figure 1, if a search command such as "dir2/c.bmp" is input in order to search for "c.bmp" 154, the device searches for the FIDs in a directory area of a root directory 111 in the order they were created. That is, the device respectively searches for the file, "a.txt" 131, the directory, "dir1" 132, and the directory, "dir2" 133.

Then, once the device checks "dir2" included in the search command, it searches for the FIDs in the directory area of the directory, "dir2" 133. That is, the device respectively searches for the directory, "dir3" 152, the directory, "dir4" 153, and the file, "c.bmp" 154.

Then, the device completes the search as soon as it checks "c.bmp" included in the search command. That is, the device respectively searches for the directories, "dir1" 132, "dir3" 152, and "dir4" 153 in order to find the file "c.bmp" included in the directory "dir2" 133.

The aforementioned search method may waste resources, and require significant search time. Particularly, such method works against a UDF file system storing a massive amount of files and directories. Therefore, a new method requiring less computer resources and search time in the UDF file system is required.

Exemplary embodiments of the present invention overcome the above disadvantages and other disadvantages not described above. Also, the present invention is not required to overcome the disadvantages described above, and an exemplary embodiment of the present invention may not overcome any of the problems described above.

An aspect of the present invention provides a user interface that can be set up according to user preferences.

The aspects of the present invention will become clear to those skilled in the art upon review of the following description, attached drawings and appended claims.

According to an aspect of the present invention, there is provided an apparatus for managing data, the apparatus including an input unit that receives a search command including a save location of stored, predetermined data in a predetermined file system environment; a path extractor that analyzes the search command, and sequentially extracts the path included in the save location; a controller that determines whether the extracted path is a directory or a file; and a path searcher that searches for the extracted path in a directory area including a file identifier corresponding to the result of the determination.

According to another aspect of the present invention, there is provided a method of managing data, the method including receiving a search command including a save location of stored, predetermined data in a predetermined file system environment; analyzing the search command and sequentially extracting path included in the save location; determining whether the extracted path is a directory or a file; and searching for the extracted path in a directory area including a file identifier corresponding to the result of the determination.

The above and other features and advantages of the present invention will become more apparent by describing in detail exemplary embodiments thereof with reference to the attached drawings, in which:
Figure 1 is a conceptual diagram illustrating a hierarchical structure of files and directories in a UDF file system;
Figure 2 illustrates a data area of a directory;
Figure 3 is a block diagram illustrating an apparatus for managing data;
Figure 4 illustrates a search command according to an exemplary embodiment of the present invention;
Figure 5 is a conceptual diagram illustrating a hierarchical structure of a directory and a file;
Figure 6 is a flow chart illustrating a process of managing data according to an exemplary embodiment of the present invention;
Figure 7 illustrates a process of generating data according to an exemplary embodiment of the present invention.

Exemplary embodiments of the present invention will be described in detail with reference to the accompanying drawings.

Advantages and features of the present invention and methods of accomplishing the same may be understood more readily by reference to the following detailed description of the exemplary embodiments and the accompanying drawings. The present invention may, however, be embodied in many different forms and should not be construed as being limited to the exemplary embodiments set forth herein. Rather, these exemplary embodiments are provided so that this disclosure will be thorough and complete and will fully convey the concept of the invention to those skilled in the art, and the present invention is defined by the appended claims. Like reference numerals refer to like elements throughout the specification.

The present invention is described hereinafter with reference to flowchart illustrations of user interfaces, methods, and computer program products according to exemplary embodiments of the invention.

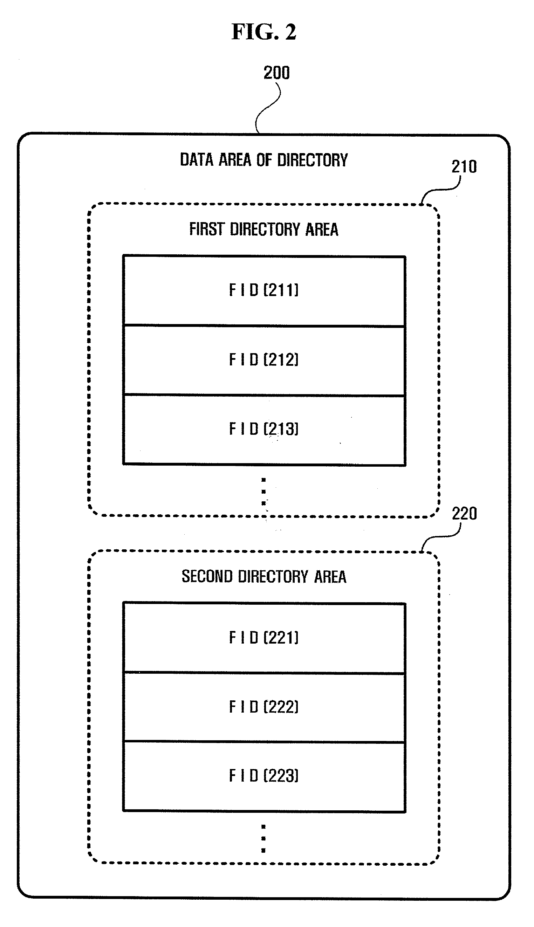

Figure 2 illustrates a data area of a directory according to an exemplary embodiment of the present invention.

Unlike a conventional UDF system where a single directory area is allocated to a single directory, the UDF system according to an exemplary embodiment of the present invention has two directory areas 210 and 220 allocated to a directory data area 200. That is, the UDF system is divided into a directory area 210 (hereinafter, referred to as a "first directory") including FIDs 211, 212, and 213 with respect to the file and the directory area 220 (hereinafter, referred to as a "second directory") including FIDs 221, 222, and 223 with respect to the directory.

Here, information such as the property, access permission, access time, size, and location of data (e.g., the file or sub directory) is stored in the FIDs included in each directory area. The FIDs are automatically arranged in the order they were created, or are manually arranged by a user.

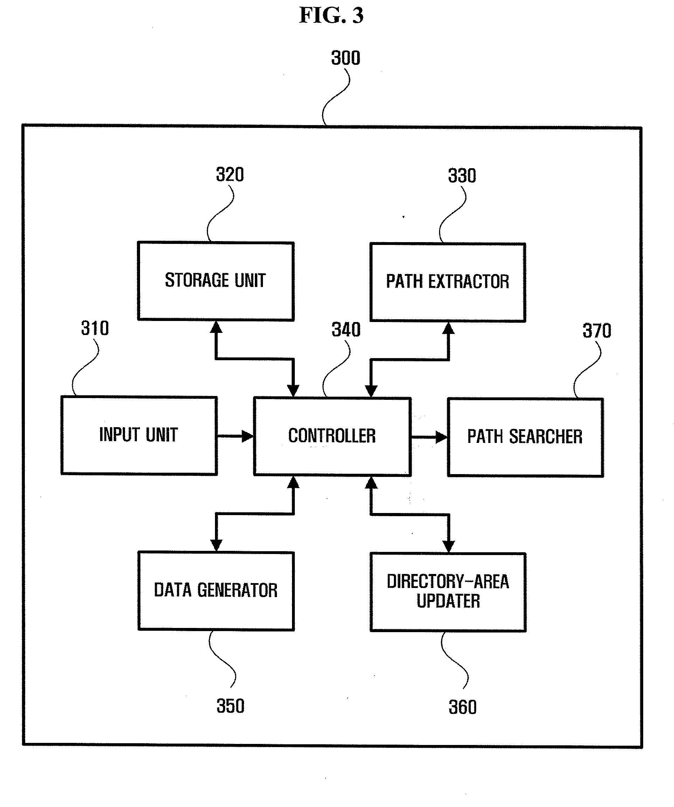

Figure 3 is a block diagram illustrating an apparatus for managing data according to an exemplary embodiment of present invention. The apparatus for managing the data (hereinafter, referred to as "a data management device 300") includes an input unit 310, a storage unit 320, a path extractor 330, a controller 340, a data generator 350, a directory-area updater 360, and a path searcher 370.

The data management device 300 includes computers, digital TVs, mobile phones, personal digital assistants (PDAs), portable multimedia players (PMPs), MP3 players, USB memory sticks, and other devices using a file system, including the storage unit 320.

The file system of the data management device 300 can be a FAT, NTFS, UFS, EXT2, EXT3, or JFS file system, but UDF divides the directory area into the first directory 210 and the second directory 220.

The storage unit 320 stores the first directory 210 and second directory 220. In addition, the storage unit 320 is a module that can input and output information, including a hard disk, a flash memory, a compact flash (CF) card, a secure digital (SD) card, a smart media (SM) card, a multimedia card (MMC), or a memory stick. The storage unit 320 may be put inside the data management device 300 or in another device.

The input unit 310 receives search commands from a user. In order to perform such a task, the input unit 310 may have a button, touch pad, or wheel, which can receive characters or numbers. The user inputs the search command that includes a path of the data that has been stored in order to search for specific data stored in the storage unit 320.

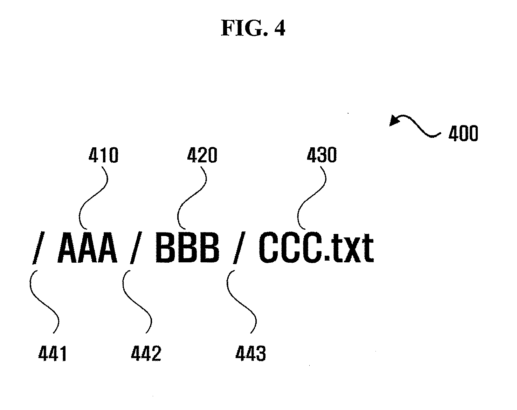

In addition, as shown in Figure 4, the search command includes directories named "AAA" 410 and "BBB" 420 and a file named "CCC.txt" 430, each of which may be directly input by the user or automatically generated and input by an additional module.

The path extractor 330 analyzes the input search command, and sequentially extracts a path by step. For example, referring to Figure 4, the path extractor 330 respectively extracts the directory "AAA", the directory "BBB", and the file "CCC.txt". The path of each directory and file is divided by slashes 441, 442, and 443, which the path extractor 330 uses to sequentially extract the path of the directory or file.

The controller 340 determines whether the path extracted by the path extractor 330 is the directory or file. In general, the path included in the search command is of the directory except for the one located at the end. The controller 340 checks the type of the extracted path using information whether the path is located at the end.

In addition, since an extension is appended to the end of a file name, the controller 340 checks whether the extension is appended to the path located at the end, and whether the path is the directory or file.

The path searcher 370 searches for the path extracted by the path extractor 330 in the directory area including the FID that corresponds to the result of the determination made by the controller 340. That is, the path searcher 370 searches for the path extracted by the path extractor 330 in the first directory 210 if the data determined by the controller 340 is a file, and searches for the path extracted by the path extractor 330 in the second directory 220 if the data determined by the controller 340 is a directory.

The directory name can have a period or specific characters as the file name may, but cannot have a period or the extension. That is, since the controller 340 cannot determine whether the data is the file or directory, the controller 340 may not determine whether the path at the end included in the file command is the file or directory.

Accordingly, the controller 340 may allow the path searcher 370 to execute a search in the first directory area 210 and the second directory area 220.

In addition, the controller 340 controls the input unit 310, the storage unit 320, the path extractor 330, the data generator 350, the directory-area updater 360, the path searcher 370, and the data management device 300.

When creating a file or a directory, the user can input a data-generating command via the input unit 310. The data generator 350 generates data corresponding to the input command. As the data is generated, it is stored in the storage unit 320 or an additional process is executed thereon and the directory-area updater 360 updates the directory area stored in the storage unit 320. That is, if the data is a file, the FID is added to the first directory 210 and if the data is a directory, the FID is added to the second directory. Here, the updated directory area refers to the directory area of the directory where the data is generated.

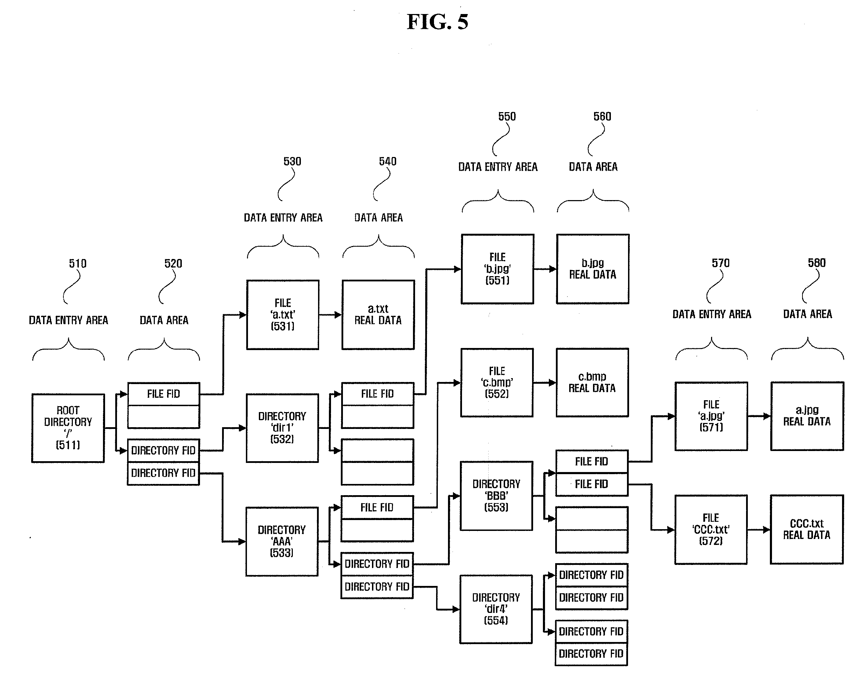

Figure 5 is a conceptual diagram illustrating a hierarchical structure of a directory and a file according to an exemplary embodiment of the present invention and each tier includes data entry areas 510, 530, 550, and 570 and data areas 520, 540, and 580.

Here, the data entry areas of the file 531, 551, 552, 571, and 572 include file names, and the data areas of the file include real files.

In addition, the entry areas of the directory 511, 532, 533, 553, and 554 include directory names and the data areas of the directory include information on the file and a subdirectory in the form of a FID. The FID is included in the first directory and the second directory according to the type.

A path searcher 370 searches for the data entry areas 511, 531, 532, 551, 552, 553, 554, 571, and 572 tracking the FID corresponding to the type of the data, and searches for the data that is at the end of the path.

The search according to the search command shown in Figure 4 is executed as follows.

First, the first path, "AAA" 410 is extracted by a path extractor 330. Since "AAA" is not the final path, a controller 340 considers it a directory as opposed to a file. Accordingly, the path searcher 370 searches for a directory, "AAA" in the FID of the second directory 220 among directory areas included in a data area of a root directory 511. That is, a search for the FID in the first directory is skipped. Here, since the FIDs of the second directory are searched for in the order they were created, "AAA" is searched for after "dir1" is searched for.

Once the search for the first path has been completed, the path searcher 370 extracts the second path, "BBB" 420. Here, since "BBB" 420 is not the final path and considered to be a directory, the path searcher 370 skips a search for the first directory 210 among directory areas included in the directory "AAA" 533, and searches for a directory "BBB" 553 in the FID of the second directory 220. As mentioned above, the directories are searched for in the order they were created. That is, "dir4" 554 is searched for after "BBB" 553 is searched for. Since the directory "BBB" 553 has been searched for, the search for the directory "dir4" 554 may be skipped.

Once the search for the second path has been complete, the path extractor 330 extracts the third path, "CCC.txt" 430. Here, "CCC.txt" 430 is the final path with an extension appended thereto, and is considered to be a file. Therefore, the path searcher 370 skips a search for the second directory 220 among the directory areas included in the data area of the directory "BBB" 553, and searches for a file "CCC.txt" 572 in the FID in the first directory. A "file a.jpg" 571 is searched for, and then a file "CCC.txt" 572 is searched for.

Referring to the name of the third path "CCC.txt" 430 may not reveal whether the data is a file or a directory. Accordingly, the path searcher 370 may execute a search in the first directory 210 among directory areas included in the data area of the directory "BBB" 553 as well as the second directory 220.

According to a conventional method, a total of 8 sets of data, i.e., the file "a.txt" 531, the directory "dir1" 532, the directory "AAA" 533, the file "b.jpg" 551, the file "c.bmp" 552, the directory "BBB" 553, the file "a.jpg" 571, and the file "CCC.txt" 572 are searched for. According to the present invention, however, a total of 5 sets of data, i.e., the directory "dir1" 532, the directory "AAA" 533, the directory "BBB" 553, the file "a.jpg" 571, and the file "CCC.txt" 572 are searched for.

The time required for the search may increase as the number of sets of stored data and the path size increases.

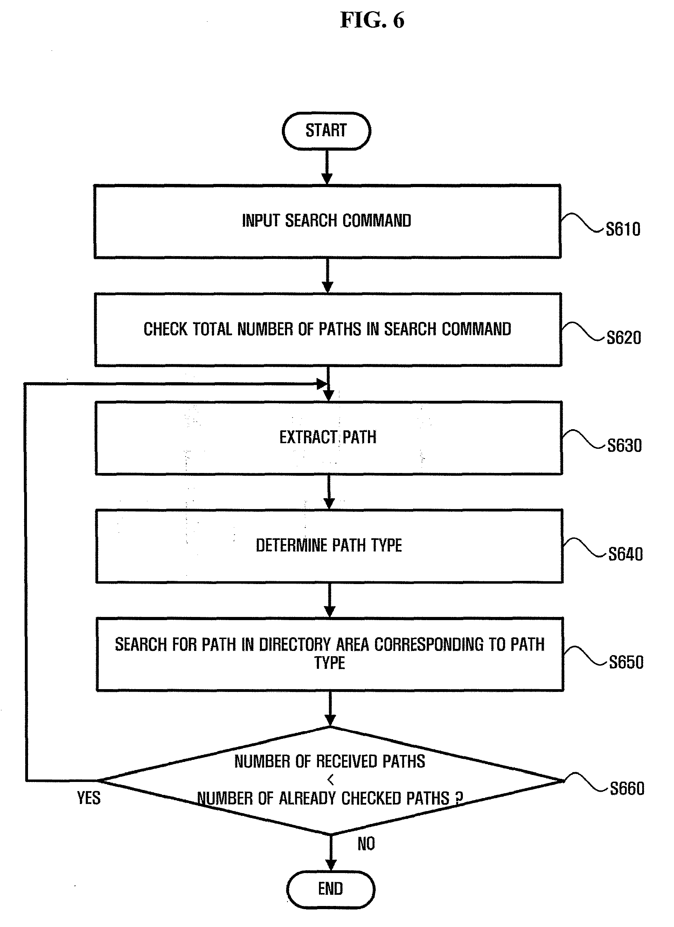

Figure 6 is a flow chart illustrating a process of managing data according to an exemplary embodiment of the present invention.

An input unit 310 of the data management device 300 receives a search command including a path where data is stored from a user S610. The search command includes the name of a directory or a file according to the search order.

The input search command is transmitted to a controller 340, which checks a total number of the paths included in the received search command S620, and transmits it to a path extractor 330.

The path extractor 330 analyzes the search command, and sequentially extracts the path included in the save location. For example, the search command 400 in Figure 4 sequentially extracts "AAA", "BBB", and "CCC.txt". The extracted path is transmitted to the controller 340, which then determines whether the transmitted path is a file or a directory S640.

The result of the determination is transmitted to a path searcher 370 that searches for the extracted path in a directory area including a FID corresponding to the result of the determination via the path extractor 330 S650.

The controller 340 compares the number of the paths received from the path extractor 330 to the number of the paths that have been checked S660. If the number of received paths and the total number of the paths already checked are different, the controller 340 instructs the path extractor 330 to extract the next path. Otherwise, the search is completed.

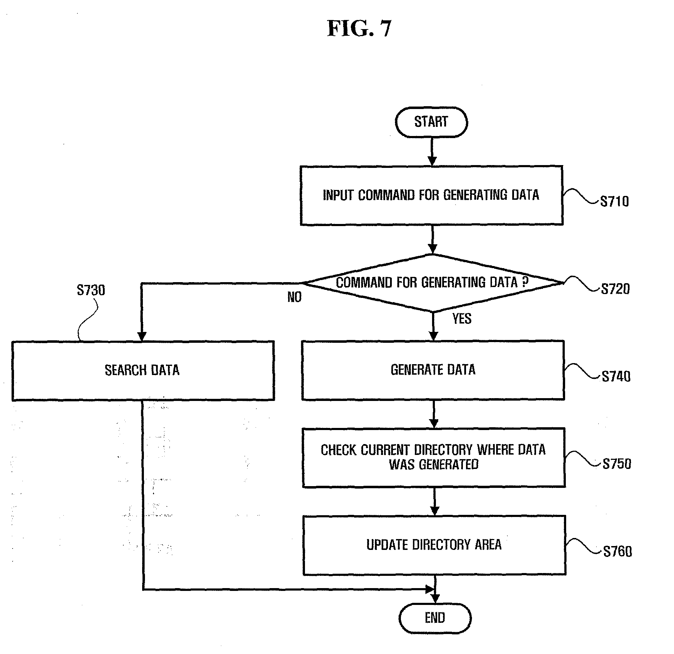

Figure 7 illustrates a process of generating data according to an exemplary embodiment of the present invention.

An input unit 310 of a data management device 300 receives a command for generating data from a user S710. The command for generating the data may include the name and type of data, and information input to a FID.

The input command for generating the data is transmitted to a controller 340. The controller 340 then checks if the received command is for the searching or generating of the data S720. If the command is for searching the data, the search is executed according to the process in Figure 6 S730. If the command is for generating the data, the received command is transmitted to a data generator 350.

The data generator 350 generates the data according to the received command S740. The controller 340 checks a current directory where the data was generated S750, and transmits information on the current directory and the data to a directory-area updater 360.

The directory-area updater 360 updates a directory area of a directory including the generated data from the data stored in a storage unit 320. That is, if the generated data is a file, the directory-area updater updates the first directory 210 and if the generated data is a directory, the directory-area updater updates the second directory 220.

In addition, the input unit 310 may receive a command for modifying or erasing the data that has been stored and the directory-area updater 360 may update the directory area of the directory in order to correspond to the command.

It will be understood that each block of the flowchart illustrations, and combinations of blocks in the flowchart illustrations, can be implemented by computer program instructions. These computer program instructions can be provided to a processor of a general purpose computer, special purpose computer, or other programmable data processing apparatus to produce a machine, such that the instructions, which execute via the processor of the computer or other programmable data processing apparatus, create means for implementing the functions specified in the flowchart block or blocks.

These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks. The computer program instructions may also be loaded into a computer or other programmable data processing apparatus to cause a series of operational steps to be performed in the computer or other programmable apparatus to produce a computer implemented process such that the instructions that execute in the computer or other programmable apparatus provide steps for implementing the functions specified in the flowchart block or blocks.

And each block of the flowchart illustrations may represent a module, segment, or portion of code, which comprises one or more executable instructions for implementing the specified logical function(s). It should also be noted that in some alternative implementations, the functions noted in the blocks may occur out of order. For example, two blocks shown in succession may in fact be executed substantially concurrently or the blocks may sometimes be executed in reverse order depending upon the functionality involved.

The exemplary embodiments of the present invention have been explained with reference to the accompanying drawings, but it will be apparent to those skilled in the art that various modifications and changes may be made thereto without departing from the scope of the invention as defined in the appended claims. Therefore, it should be understood that the above exemplary embodiments are not restrictive but illustrative in all aspects.

## Claims

1. An apparatus for managing data, the apparatus comprising:
an input unit (310) configured to receive a search command comprising a save location of stored data in a file system;
a path extractor (330) configured to analyze the search command, and sequentially extract a path included in the save location;
a controller (340) configured to determine whether the extracted path is one of a directory and a file; and
a path searcher (370) configured to search for the extracted path in a directory area (210, 220) comprising a file identifier corresponding to the determination.

2. The apparatus of claim 1, wherein the file system comprises a general-purpose-disk-format file system.

3. The apparatus of claim 1 or 2, wherein the file system has a first file system directory area (210) comprising a first file system file identifier with respect to a file system file and a second file system directory area (210) comprising a second file system file identifier with respect to a file system directory.

4. The apparatus of any one of the preceding claims further comprising a storage unit (320) having the directory area or areas (210, 220) stored therein.

5. The apparatus of claim 4 further comprising a directory-area updater (360) configured to update a directory area corresponding to a type of generated data in the directory area or areas (210) stored in the storage unit (320).

6. The apparatus of any one of the preceding claims , wherein the data comprises one of the directory and the file.

7. A method of managing data, the method comprising:
receiving a search command comprising a save location of stored data in a file system;
analyzing the search command and sequentially extracting a path from the save location;
determining whether the extracted path is one of a directory and a file; and
searching for the extracted path in a directory area comprising a file identifier corresponding to the determination.

8. The method of claim 7, wherein the file system comprises a general-purpose-disk-format file system.

9. The method of claim 8, wherein the general-purpose-disk-format file system comprises a first file system directory area (210) comprising a first file system file identifier with respect to a file system file and second file system directory area (220) comprising a second file system file identifier with respect to a file system directory.

10. The method of claim 7 further comprising storing the directory area.

11. The method of claim 10 further comprising updating a second directory area (220) corresponding to a type of generated data in the stored directory area.

12. The method of claim 7, wherein the data comprises one of the directory and the file.

13. A method of storing data, comprising:
receiving a data-generating command;
generating data corresponding to the command;
determining if the data is a directory or a file; and
if the data is a file, updating a first directory area (210) with an FID of the file or, if the data is a directory, updating a second directory area (220) with an FID of the directory.

14. A computer-readable recording medium storing a program for performing the method of any one of claims 7 to 13.

15. An apparatus for storing data comprising an input unit (310) configured to receive a data generating command;
a data generator (350) configured to generate data;
a storage unit (320) for storing generated data and having first and second directory areas (210, 220); and
a directory-area updater (360) configured to, if the data is a file, update the first directory area (210) with an FID of the file or, if the data is a directory, update a second directory area (220) with an FID of the directory.
